# EUROPÄISCHE PATENTSCHRIFT

(11) **EP 0 620 699 B1**
(45) Veröffentlichungstag und Bekanntmachung des Hinweises auf die Patenterteilung: **22.04.1998**
(21) Anmeldenummer: 94105421.5
(22) Anmeldetag: 08.04.1994
(51) Int. Cl.: H05B 37/02

(54) **Bewegungsmelder**
Motion detector
Détecteur de mouvement

(30) Priorität: 13.04.1993 DE 4312056
(43) Veröffentlichungstag der Anmeldung: 19.10.1994
(73) Patentinhaber: ABB PATENT GmbH, 68309 Mannheim (DE)
(72) Erfinder: Rosch, Dr. Rainer, D-58515 Lüdenscheid (DE); Zapp. Robert, D-58579 Schalksmühle (DE)
(74) Vertreter: Rupprecht, Klaus, Dipl.-Ing.

(56) Entgegenhaltungen:
- EP-A- 0 098 521
- EP-A- 0 447 849
- WO-A-92/10074
- DE-C- 3 019 279
- US-A- 5 136 213

## Beschreibung

Die Erfindung bezieht sich auf einen Bewegungsmelder zum bewegungsabhängigen Schalten mindestens einer Lichtquelle.

Aus der US-A-5 136 213 ist ein Bewegungsmelder zum bewegungsabhängigen Schalten mindestens einer die mindestens eine Lichtquelle bedarfsweise mit einer Energieversorgungsstufe verbindenden Schaltstufe bekannt, die in Abhängigkeit der Signale eines Bewegungsmelders ansteuerbar ist.

Bewegungsmelder zum bewegungsabhängigen Schalten von Licht haben üblicherweise einen Lichtsensor, der den Schaltausgang unterhalb einer eingestellten Schwelle (unterer Helligkeitsgrenzwert) bei Dämmerung freigibt. Es ist von Nachteil, daß dieser Lichtsensor auch auf Fremdlicht von Straβenlampen, Autoscheinwerfern, Taschenlampen oder auch durch das geschaltete Licht selbst reagiert und somit dem Gerät eine falsche (zu große) Helligkeit vortäuscht und gegebenenfalls ein Schalten bei Bewegung verhindert. Außerdem ist die Einstellung des unteren Helligkeitsgrenzwertes zum Zeitpunkt der Installation (tagsüber) nicht möglich, da es zu hell ist. Eine Justage auf den richtigen Arbeitspunkt kann mehrere Tage dauern, da das Ergebnis immer erst am nächsten Tag überprüft werden kann. Die Einstellung bei einer empfohlenen Montagehöhe von 2,5 m und mehr erschwert zusätzlich die Einstellarbeit.

Der Erfindung liegt die Aufgabe zugrunde, einen Bewegungsmelder der eingangs genannten Art anzugeben, der die schwierige Einstellung von Helligkeitswerten nicht benötigt und der auch bei Vorliegen von Fremdlicht, wie Straßenlampenlicht, Autoscheinwerferlicht und Taschenlampenlicht zuverlässig ein Schalten bei Bewegung ermöglicht.

Diese Aufgabe wird durch einen Bewegungsmelder zum bewegungsabhängigen Schalten mindestens einer Lichtquelle gelöst, mit einer die mindestens eine Lichtquelle bedarfsweise mit einer Energieversorgungsstufe verbindenden Schaltstufe, die in Abhängigkeit der Signale eines Bewegungssensors ansteuerbar ist, sobald die aktuelle Lichtintensität eine vorgebbare untere Helligkeitsgrenze unterschreitet, wobei die aktuelle Lichtintensität durch ein Zeitmodul gemäß dem durch Sonnenaufgang und Sonnenuntergang definierten Sonnenstand in Abhängigkeit des aktuellen Kalendertages und des aktuellen Kalendermonats nachgebildet wird, das Zeitmodul eine Auswerteschaltung mit Festwertspeicher aufweist, dem die Sonnenaufgänge und Sonnenuntergänge in Abhängigkeit des Kalendertages und des Kalendermonats eingespeichert sind, der Auswerteschaltung mit Festwertspeicher eingangsseitig der aktuelle Kalendertag und der aktuelle Kalendermonat vorgegeben werden, die Auswerteschaltung die Lichtquelle in Abhängigkeit des aktuellen Sonnenaufgangs und Sonnenuntergangs unter Berücksichtigung von vorgegebenen Differenzzeiten ansteuert und ein UND-Gatter vorgesehen ist, das ausgangsseitig die Schaltstufe der Lichtquelle ansteuert, dessen erster Eingang mit einer vom Bewegungssensor angesteuerten Schaltstufe verbunden ist und dessen zweiter Eingang an eine von der Auswerteschaltung angesteuerte Schaltstufe angeschlossen ist, wobei letztere während des Wächterbetriebes mittels der Auswerteschaltung geschlossen wird.

Dabei ist es aus der EP-A-0447 849 an sich bereits bekannt, das Steuerteil einer elektrischen Rolladensteuerung mit einer Jahreskalendereinheit zu versehen, welche die automatische Erzeugung von Steuersignalen zur Betätigung des Rolladen-Motors abhängig von der Tageszeit des Sonnenaufganges und des Sonnenunterganges gestattet. Eine als Uhr dienende Zählereinheit liefert an einen Vergleicher einen Tageszeit-Wert, welcher mit einer aus einem Tabellenspeicher ausgelesenen oder berechneten Zeitwert für das Öffnen bzw. Das Schließen des Rolladens verglichen wird. Bei Übereinstimmung wird das entsprechende Steuersignal erzeugt.

Die mit der Erfindung erzielbaren Vorteile bestehen insbesondere darin, daß der durch einen Bewegungssensor gesteuerte bedarfsorientierte Beleuchtungsbetrieb durch keinerlei Fremdlicht, auch nicht durch die vom Bewegungsmelder selbst geschaltete Lichtquelle, gestört wird. Der Zeitbereich, in dem der Wächter arbeiten (aktiv sein) soll, kann bereits zum Zeitpunkt der Installation tagsüber exakt, eindeutig und zuverlässig reproduzierbar unabhängig von den während der Installation zufällig herrschenden Lichtverhältnissen eingestellt werden. Eine Überprüfung der vorgenommenen Einstellung und eine Neujustierung am folgenden Tag können entfallen.

Diese Funktion wird dadurch erreicht, daß der Freigabezeitpunkt des Bewegungssensors von einem Zeitglied (Uhr und Kalender oder Funkempfänger-Uhr) abgeleitet wird, dessen eingestellter Zeitwert sich entsprechend dem Datum (Sonnenauf- und -untergang) ändert. Diese Zeiten des Sonnenauf- und -untergangs können in einem Festwertspeicher abgelegt sein.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Figur 1: eine Ausführungsform mit Uhrwerk und Kalenderwerk,
- Figur 2: eine Ausführungsform mit Funkuhr-Empfänger.

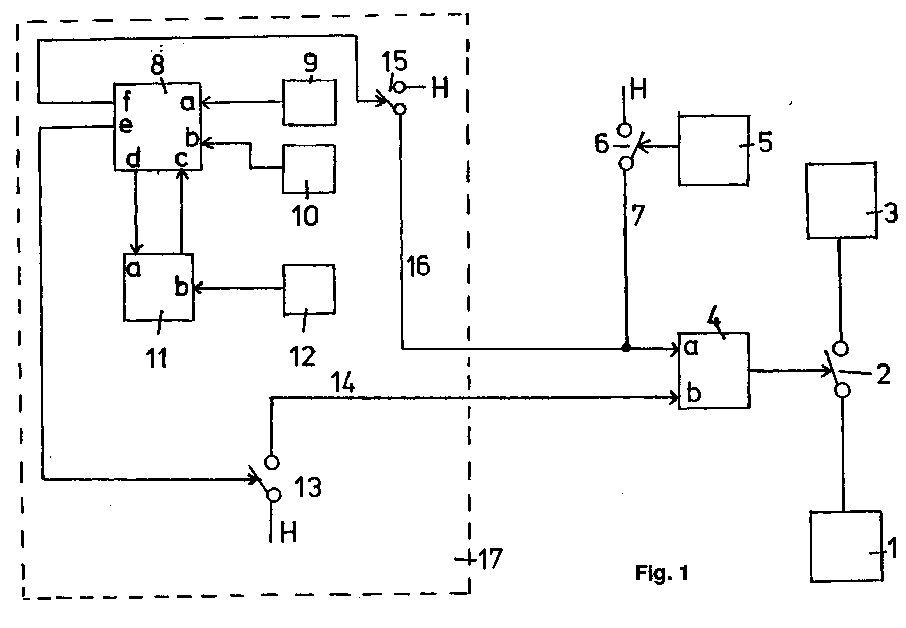

In Figur 1 ist eine Ausführungsform mit Uhrwerk und Kalenderwerk dargestellt. Es ist eine Lichtquelle 1 zu erkennen, die über eine Schaltstufe 2 mit einer Energieversorgungsstufe 3, z.B.einem Netz, verbindbar ist. Die Schaltstufe 2 wird durch ein UND-Gatter 4 angesteuert.

Ein Bewegungssensor mit Auswertestufe 5 (z.B. ein Infrarotmelder) steuert eine Schaltstufe 6 an, die im geschlossenen Zustand das logische Signal H (High) über eine Signalleitung 7 an den Eingang a des UND-Gatters 4 durchschaltet.

Einer Auswerteschaltung 8 mit Festwertspeicher 8 sind die vom Kalendertag und Kalendermonat abhängigen Uhrzeiten der Sonnenaufgänge und Sonnenuntergänge eingespeichert. An den ersten Eingang a der Auswerteschaltung 8 mit Festwertspeicher ist ein Uhrwerk 9 und an den zweiten Eingang b ein Kalenderwerk 10 angeschlossen. Der dritte Eingang c der Auswerteschaltung 8 mit Festwertspeicher empfängt Signale eines Differenzwertspeichers 11, während der erste Ausgang d der Auswerteschaltung 8 mit Festwertspeicher den ersten Eingang a dieses Speichers 11 mit Signalen beaufschlagt. Der zweite Eingang b des Differenzwertspeichers 11 ist mit einem Eingabegerät 12 verbunden, das zur Eingabe von für die Programmierung des Bewegungsmelders wichtigen Daten bei der Installation dient. Der zweite Ausgang e der Auswerteschaltung 8 mit Festwertspeicher steuert eine Schaltstufe 13 an. Ein dritter Ausgang f der Auswerteschaltung 8 dient zur Ansteuerung einer weiteren Schaltstufe 15. Bei geschlossener Schaltstufe 13 wird das logische Signal H über die Signalleitung 14 auf den Eingang b des UND-Gatters 4 geschaltet.

Bei geschlossener Schaltstufe 15 wird das logische Signal H über die Signalleitung 16 auf den Eingang a des UND-Gatters 4 geschaltet.

Die aus den Baukomponenten 8 bis 13 und 15 bestehende Anordnung wird auch als Zeitmodul 17 bezeichnet.

Nachfolgend wird die Funktionsweise der Anordnung näher beschrieben. Dabei sind drei unterschiedliche Aktivierungszustände des Bewegungsmelders zu unterscheiden. Beim ersten Aktivierungszustand ist der Bewegungsmelder nicht aktiviert, da infolge der ausreichenden aktuellen Tageshelligkeit ein durch den Bewegungssensor gesteuerter bedarfsorientierter Beleuchtungsbetrieb nicht erforderlich ist. Die Schaltstufe 13 ist geöffnet, wodurch das UND-Gatter 4 aufgrund des fehlenden Signales H an seinem Eingang b die Schaltstufe 2 stets geöffnet hält - unabhängig von den Schaltzuständen der übrigen Schaltstufen 6 und 15. Die Lichtquelle 1 wird über den Bewegungsmelder keinesfalls eingeschaltet.

Beim zweiten Aktivierungszustand ist der Bewegungsmelder aktiviert (Wächterbetrieb), da die aktuelle Tageshelligkeit nicht mehr ausreicht und eine durch den Bewegungssensor gesteuerte bedarfsorientierte Beleuchtung erforderlich ist. Die Schaltstufe 13 ist geschlossen und am Eingang b des UND-Gatters 4 steht das Signal H an. Erfaßt der Bewegungssensor 5 während des zweiten Aktivierungszustandes eine Bewegung, so schließt er die Schaltstufe 6, wodurch auch an den Eingang a des UND-Gatters 4 ein Signal H gelegt wird und das UND-Gatter 4 folglich die Schaltstufe 2 schließt. Die Lichtquelle 1 wird somit bedarfsorientiert eingeschaltet.

Beim dritten Aktivierungszustand (Dauerlichtbetrieb) ist die aktuelle Tageshelligkeit ebenfalls nicht mehr ausreichend. Die Schaltstufe 13 ist geschlossen. Am Eingang b des UND-Gatters 4 steht das Signal H an. Zusätzlich ist die Schaltstufe 15 durch die Auswerteschaltung 8 geschlossen, wodurch das Signal H auf den Eingang a des UND-Gatters 4 aufgeschaltet wird. Somit schließt das UND-Gatter 4 die Schaltstufe 2, wodurch die Lichtquelle dauernd eingeschaltet bleibt (Dauerlichtbetrieb) - unabhängig von bedarfsorientierten Schaltvorgängen des Bewegungssensors 5. Erst nach Öffnung der Schaltstufe 15 durch die Auswerteschaltung 8 geht der Betrieb in den durch den Bewegungssensor gesteuerten bedarfsorientierten Beleuchtungsbetrieb entsprechend dem vorstehend erläuterten zweiten Aktivierungszustand über.

Durch den vorstehend erläuterten dritten Aktivierungszustand ist es beispielsweise möglich, ab Beginn der Dämmerung bis beispielsweise 22 Uhr Dauerlicht einzuschalten (z.B. für Schaufensterbeleuchtung, Beleuchtung einer Einfahrt, Hofbeleuchtung) und erst ab 22 Uhr eine durch den Bewegungssensor erfaßte bedarfsorientierte Beleuchtung vorzunehmen. Diese Aufgabe übernimmt ebenfalls das Zeitmodul 17, wobei der Beginn der Dauerlichteinschaltung durch die Auswerteschaltung 8 mit Speicher in Abhängigkeit des Kalendertages, Kalendermonats und der Uhrzeit erfolgt (beide Schaltstufen 13, 15 werden mittels Auswerteschaltung 8 geschlossen) und das Ende der Dauerlichteinschaltung durch entsprechende eingegebene Daten festgelegt wird (Auswertestufe 8 öffnet Schaltstufe 15).

Um eine einfache Programmierung vornehmen zu können, ist das Zeitmodul 17 zweckmäßig als eigene, in den Bewegungsmelder einschiebbare Einheit ausgebildet. Die zur Programmierung benötigten Bedienelemente des Eingabegerätes 12 und die Anzeige von Tag, Monat und Uhrzeit sind im eingebauten Zustand abgedeckt und nicht zugänglich. Auf diese Weise wird eine absichtliche oder unbeabsichtigte Verstellung verhindert.

Um die Arbeitsweise des Bewegungsmelders zu verdeutlichen, wird die Funktionsweise nachfolgend anhand von Beispielen verdeutlicht. Wie bereits vorstehend erwähnt, weist die Auswerteschaltung 8 einen Festwertspeicher auf, in dem die Uhrzeiten der Sonnenaufgänge SA und Sonnenuntergänge SU für jeden Kalendertag abgelegt sind. Das Kalenderwerk 10 aktiviert durch geeignete Signale die in diesem Festwertspeichern abgelegten Daten, während das Uhrwerk 9 die Zeitkoordination des Zeitgliedes 17 und insbesondere die zeitlich korrekte Ansteuerung der Schaltstufen 13, 15 bewerkstelligt.

Es wird z.B. am 17. März ein Bewegungsmelder installiert. Der Installateur gibt über das Eingabegerät 12 als aktive Wächterzeit die Zeiten A = 6.00 Uhr (= Ende des Wächterbetriebes) und U = 19.00 Uhr (= Beginn des Wächterbetriebes) auf den Eingang b des Differenzwertspeichers 11, d.h. die aktive Wächterzeit endet am 17. März früh um A = 6.00 Uhr und beginnt abends um U = 19.00 Uhr. Die eingegebenen Zeiten sind durch die Dämmerung am Morgen und am Abend für diese Jahreszeit und speziell für den 17. März gewünscht.

Am 17.3. ist der Sonnenaufgang SA gemäß Kalender um 6.32 Uhr und der Sonnenuntergang SU um 18.30 Uhr. Diese Werte sind im Festwertspeicher der Auswerteschaltung 8 abgelegt und mittels entsprechender Signale des Kalenderwerks 10 abrufbar. Die Differenz D1 = A - SA zwischen eingegebener Zeit 6.00 Uhr und Sonnenaufgang 6.32 Uhr beträgt -32 Minuten am Morgen. Die Differenz D2 = U - SU zwischen eingegebener Zeit 19.00 Uhr und Sonnenuntergang 18.30 Uhr beträgt +30 Minuten am Abend. Die Differenzen D1, D2 werden vom Differenzwertspeicher 11 abgespeichert. Mit gleichen Differenzen D1 zum Sonnenaufgang und D2 zum Sonnenuntergang wird nun bei Realisierung des zweiten Aktivierungszustandes Tag für Tag der Ausgang e der Auswerteschaltung 8 in Abhängigkeit der im Festwertspeicher der Auswerteschaltung 8 abgelegten Sonnenauf- und -untergangswerte SA, SU freigegeben, d.h. das Kalenderwerk 10 aktiviert die Sonnenauf- und -untergangswerte SA, SU entsprechend dem aktuellen Datum, diese Werte werden über Ausgang d der Auswerteschaltung 8 an Eingang a des Differenzwertspeichers 11 gegeben und dort mit D1 bzw. D2 summiert. Die Summenwerte SA+D1 und SU+D2 werden zurück an Eingang c der Auswerteschaltung 8 gegeben, was in Verbindung mit der vom Uhrwerk 9 an Eingang a der Auswerteschaltung 8 gemeldeten aktuellen Uhrzeit zur zeitrichtigen Freigabe des Ausgangs e der Auswerteschaltung 8 führt. Es ergeben sich z.B. folgende Freigabezeiten SA+D1 und SU+D2.:

| Datum | SA | SU | D1 | D2 | SA+D1 | SU+D2 |
|---|---|---|---|---|---|---|
| 17.3. | 6.32 Uhr | 18.30 Uhr | -32 min | +30 min | 6.00 Uhr | 19.00 Uhr |
| 18.3 | 6.30 Uhr | 18.32 Uhr | -32 min | + 30 min | 5.58 Uhr | 19.02 Uhr |
| 19.3 | 6.27 Uhr | 18.33 Uhr | -32 min | +30 min | 5.55 Uhr | 19.03 Uhr |
| 20.3. | 6.25 Uhr | 18.35 Uhr | -32 min | +30 min | 5.53 Uhr | 19.05 Uhr |

In der Spalte SA+D1 ist das Ende der Freigabezeit am Morgen (= Ende des Wächterbetriebes) und in der Spalte SU+D2 der Beginn der Freigabezeit am Abend (= Beginn des Wächterbetriebes) angegeben. Der Bewegungsmelder ist z.B. am 19. März ab 19.03 Uhr bis zum 20. März, 5.53 Uhr aktiv.

Bei einfacherer Ausführungsform des Bewegungsmelders ist es auch möglich, die Freigabezeiten des Wächterbetriebes nicht jeden Tag, sondern beispielsweise jeden dritten Tag (jeden fünften Tag, jeden zehnten Tag usw.) entsprechend den veränderten Uhrzeiten des Sonnenaufgangs und Sonnenuntergangs zu korregieren und zu aktualisieren. Hierdurch wird Speicherplatz gespart, d.h. der Festwertspeicher der Auswerteschaltung 8 kann von geringerer Kapazität sein.

Weiterhin ist es auch möglich, eine oder mehrere Kombinationen von Schalt- und Freigabezeiten (= Kombination von aktivem Wächterbetrieb und Dauerlichtbetrieb, siehe dritter Aktivierungszustand) zu programmieren, so z.B. am
17./18.3. von SU+D2 = 19.00 Uhr bis DA = 22.00 Uhr: Dauerlichtbetrieb
von DE = 22.00 Uhr bis SA+D1 = 5.58 Uhr: Wächterbetrieb
18./19.3 von SU+D2 = 19.02 Uhr bis DA = 22.00 Uhr: Dauerlichtbetrieb
von DE = 22.00 Uhr bis SA+D1 = 5.55 Uhr: Wächterbetrieb.

Bei einer derartigen Kombination von Wächterbetrieb/Dauerlichtbetrieb dienen die in Abhängigkeit des Sonnenuntergangs SU sich ändernden Uhrzeiten SU+D2 zur Festlegung des Beginns des Dauerlichtbetriebes, um z.B. ein Schaufenster zu beleuchten. Mit der Uhrzeit DA wird das Ende des Dauerlichtbetriebes festgelegt. DA ändert sich nicht in Abhängigkeit von SU. Mit der Uhrzeit DE wird der Beginn des Wächterbetriebs festgesetzt. DE ändert sich ebenfalls nicht in Abhängigkeit von SU. Die sich in Abhängigkeit des Sonnenaufgangs SA ändernden Uhrzeiten SA+D1 legen das Ende des Wächterbetriebes am Morgen fest.

Die Werte DE und DA werden der Auswerteschaltung 8 ebenfalls über das Eingabegerät 12 bei der Installation des Bewegungsmelders eingegeben. Im Zeitraum von SU+D2 bis DA (= Dauerlichtbetrieb) werden die Schaltstufen 13 und 15 über die Ausgänge e und f der Auswerteschaltung 8 angesteuert, d.h. geschlossen. Im Zeitraum von DE bis SA+D1 (= Wächterbetrieb) wird die Schaltstufe 13 über den Ausgang e der Auswerteschaltung 8 angesteuert, d.h. geschlossen. Ergeben sich Überschneidungen der Zeiträume von Dauerlichtbetrieb und Wächterbetrieb, so hat der Dauerlichtbetrieb Vorrang (siehe auch dritter Aktivierungszustand).

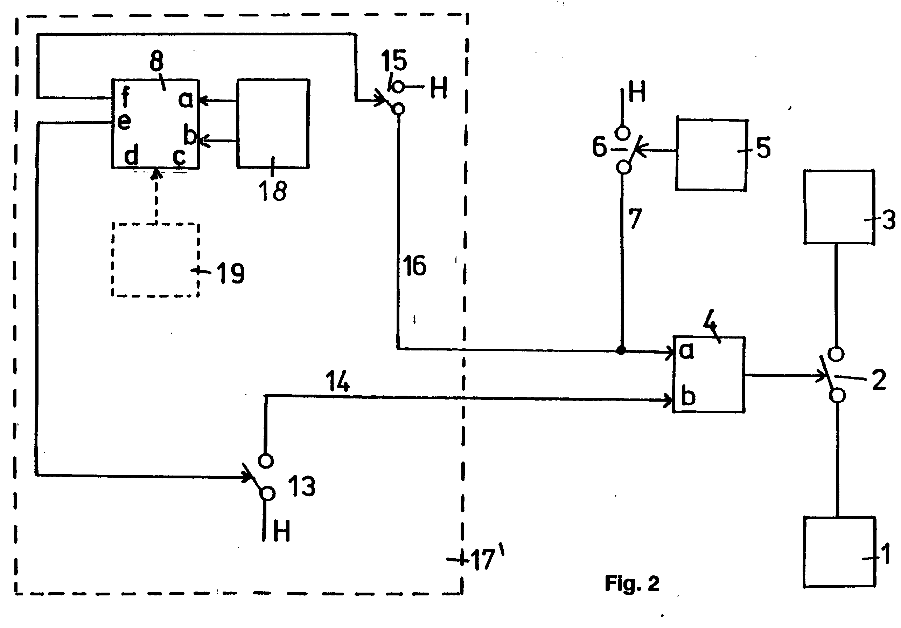

In Figur 2 ist eine Ausführungsform mit Funkuhr-Empfänger dargestellt. Bei dieser Variante entfallen Uhrwerk 9, Kalenderwerk 10, Differenzwertspeicher 11 und Eingabegerät 12. Die Eingänge a und b der Auswerteschaltung 8 sind mit einem Funkuhr-Empfänger 18 verbunden, der den aktuellen Kalendertag, den aktuellen Kalendermonat und die aktuelle Uhrzeit empfängt und der Auswerteschaltung 8 vorgibt. Vorteilhaft müssen Zeit und Datum bei dieser Variante bei der Montage des Bewegungsmelders nicht eingegeben werden. Tastatur und Anzeige sowie gegebenenfalls eine Netzausfallsicherung können entfallen. Die Differenzen D1, D2 - z.B. +30 Min./-30 Min. - können entweder fest vorgegeben sein oder mittels eines optionalen mehrstufigen Vorwahlschalters (Codeschalter) 19 in vorprogrammierten Schritten - z.B. ± 15 Min., ± 45 Min. - bei der Montage vorgewählt werden. Gleiches gilt für die Werte DE, DA, die vorzugsweise ebenfalls entweder fest vorgegeben sind oder bei der Montage in vorprogrammierten Schritten vorgewählt werden.

Bei der Ausführungsform gemäß Figur 2 besteht das Zeitmodul 17' demnach aus den Baukomponenten 8, 13, 15, 18 und 19.

## Patentansprüche

1. Bewegungsmelder zum bewegungsabhängigen Schalten mindestens einer Lichtquelle, mit einer die mindestens eine Lichtquelle (1) bedarfsweise mit einer Energieversorgungsstufe (3) verbindenden Schaltstufe (2), die in Abhängigkeit der Signale eines Bewegungssensors (5) ansteuerbar ist, sobald die aktuelle Lichtintensität eine vorgebbare untere Helligkeitsgrenze unterschreitet, wobei die aktuelle Lichtintensität durch ein Zeitmodul (17,17') gemäß dem durch Sonnenaufgang und Sonnenuntergang definierten Sonnenstand in Abhängigkeit des aktuellen Kalendertages und des aktuellen Kalendermonats nachgebildet wird, das Zeitmodul (17,17') eine Auswerteschaltung (8) mit Festwertspeicher aufweist, dem die Sonnenaufgänge und Sonnenuntergänge in Abhängigkeit des Kalendertages und des Kalendermonats eingespeichert sind, der Auswerteschaltung (8) mit Festwertspeicher eingangsseitig der aktuelle Kalendertag und der aktuelle Kalendermonat vorgegeben werden, die Auswerteschaltung (8) die Lichtquelle in Abhängigkeit des aktuellen Sonnenaufgangs und Sonnenuntergangs unter Berücksichtigung von vorgegebenen Differenzzeiten (D1,D2) ansteuert und ein UND-Gatter (4) vorgesehen ist, das ausgangsseitig die Schaltstufe (2) der Lichtquelle (1) ansteuert, dessen erster Eingang (a) mit einer vom Bewegungssensor (5) angesteuerten Schaltstufe (6) verbunden ist und dessen zweiter Eingang (b) an eine von der Auswerteschaltung (8) angesteuerte Schaltstufe (13) angeschlossen ist, wobei letztere (13) während des Wächterbetriebes mittels der Auswerteschaltung (8) geschlossen wird.

2. Bewegungsmelder nach Anspruch 1, dadurch gekennzeichnet, daß an die Auswerteschaltung (8) mit Festwertspeicher ein Kalenderwerk (10) und ein Uhrwerk (9) angeschlossen sind.

3. Bewegungsmelder nach Anspruch 1, dadurch gekennzeichnet, daß an die Auswerteschaltung (8) mit Festwertspeicher ein Funkuhr-Empfänger (18) angeschlossen ist.

4. Bewegungsmelder nach den Ansprüchen 1 und 2, dadurch gekennzeichnet, daß ein Eingabegerät (12) zur Eingabe von Daten dient.

5. Bewegungsmelder nach den Ansprüchen 1 und 3, dadurch gekennzeichnet, daß ein Vorwahlschalter (19) zur Eingabe von Daten dient.

6. Bewegungsmelder nach einem der Ansprüche 1 bis 5, dadurch gekennzeichnet, daß ein Differenzwertspeicher (11) die Differenzzeiten (D1,D2) zwischen eingegebenem Ende des Wächterbetriebes (A) und aktuellem Sonnenaufgang (SA) sowie zwischen eingegebenem Beginn des Wächterbetriebs (U) und aktuellem Sonnenuntergang (SU) bildet und abspeichert.

7. Bewegungsmelder nach einem der Ansprüche 1 bis 6, dadurch gekennzeichnet, daß zusätzliche Daten für einen Dauerlichtbetrieb der Lichtquelle eingebbar sind, wobei der Beginn des Dauerlichtbetriebes in Abhängigkeit des aktuellen Sonnenunterganges unter Berücksichtigung einer vorgegebenen Differenzzeit von der Auswerteschaltung (8) ermittelt wird.

8. Bewegungsmelder nach Anspruch 7, dadurch gekennzeichnet, daß der erste Eingang (a) des UND-Gatters (4) zusätzlich an eine ebenfalls von der Auswerteschaltung (8) angesteuerte weitere Schaltstufe (15) angeschlossen ist, wobei letztere (15) während des Dauerlichtbetriebes mittels der Auswerteschaltung (8) geschlossen wird.

## Claims

1. Motion detector for switching at least one light source in a fashion dependent on motion, having a switching stage (2) which, if required, connects the at least one light source (1) to a power supply stage (3) and can be controlled as a function of the signals of a motion sensor (5) as soon as the current light intensity undershoots a prescribable lower brightness limit, it being the case that the current light intensity is simulated by a time module (17, 17') in accordance with the zenith angle of the sun, defined by sunrise and sunset, as a function of the current calendar day and of the current calendar month, the time module (17, 17') has an evaluation circuit (8) with read-only storage in which the sunrises and sunsets are stored as a function of the calendar day and the calendar month, the current calendar day and the current calendar month are prescribed to the evaluation circuit (8) with read-only storage, on the input side, the evaluation circuit (8) drives the light source as a function of the current sunrise and sunset while taking account of prescribed differential times (D1, D2), and an AND gate (4) is provided which drives the switching stage (2) of the light source (1) on the output side, the first input (a) of which gate is connected to a switching stage (6) driven by the motion sensor (5), and the second input (b) of which is connected to a switching stage (13) driven by the evaluation circuit (8), the latter (13) being closed during monitoring operation by means of the evaluation circuit (8).

2. Motion detector according to Claim 1, characterized in that a calendar unit (10) and a clock unit (9) are connected to the evaluation circuit (8) with read-only storage.

3. Motion detector according to Claim 1, characterized in that a radio clock receiver (18) is connected to the evaluation circuit (8) with read-only storage.

4. Motion detector according to Claims 1 and 2, characterized in that an input device (12) serves to input data.

5. Motion detector according to Claims 1 and 3, characterized in that a preselection switch (19) serves to input data.

6. Motion detector according to one of Claims 1 to 5, characterized in that a differential-value memory (11) forms and stores the differential times (D1, D2) between an input end of the monitoring operation (A) and the current sunrise (SA), as well as between an input start of the monitoring operation (U) and the current sunset (SU).

7. Motion detector according to one of Claims 1 to 6, characterized in that additional data can be input for operating the light source with uninterrupted light, the start of operation with uninterrupted light being determined by the evaluation circuit (8) as a function of the current sunset while taking account of a prescribed differential time.

8. Motion detector according to Claim 7, characterized in that the first input (a) of the AND gate (4) is additionally connected to a further switching stage (15) likewise driven by the evaluation circuit (8), said switching stage (15) being connected during the operation with uninterrupted light by means of the evaluation circuit (8).

## Revendications

1. Détecteur de mouvement pour la commutation, en fonction d'un mouvement d'au moins une source de lumière, comprenant un étage de commutation (2) qui relie selon le besoin ladite au moins une source de lumière (1) à un étage d'alimentation en énergie (3) et qui peut être commandé en fonction des signaux d'un capteur de mouvement (5) dès que l'intensité de lumière du moment descend en dessous d'une limite de clarté inférieure qui peut être donnée au préalable, dans lequel l'intensité de lumière du moment est reproduite par un module horaire (17, 17') suivant l'état du soleil, déterminé par le lever du soleil et le coucher du soleil, en fonction du jour de calendrier du moment et du mois de calendrier du moment, dans lequel le module horaire (17, 17') présente un circuit d'évaluation (8) comprenant une mémoire de valeurs fixes dans laquelle sont mémorisés les levers de soleil et couchers de soleil en fonction du jour de calendrier et du mois de calendrier, dans lequel le jour de calendrier du moment et le mois de calendrier du moment sont donnés au préalable, du côté de l'entrée, au circuit d'évaluation (8) comprenant la mémoire de valeurs fixes, dans lequel le circuit d'évaluation (8) commande la source de lumière en fonction des lever du soleil et coucher du soleil du moment en prenant en considération des durées de différences (D1, D2) données au préalable, et dans lequel il est prévu une porte ET (4) qui commande, du côté de la sortie, l'étage de commutation (2), de la source de lumière (1), dont la première sortie (a) est reliée à un étage de commutation (6) commandé par le capteur de mouvement (5) et dont la seconde entrée (b) est raccordée à un étage de commutation (13) commandé par le circuit d'évaluation (8), ce dernier étage (13) étant fermé au moyen du circuit d'évaluation (8) pendant le fonctionnement en dispositif de contrôle.

2. Détecteur de mouvement suivant la revendication 1, caractérisé en ce qu'un système de calendrier (10) et un système d'horloge (9) sont raccordés au circuit d'évaluation (8) comportant la mémoire de valeurs fixes.

3. Détecteur de mouvement suivant la revendication 1, caractérisé en ce qu'un récepteur d'horloge par radio (18) est raccordé au circuit d'évaluation (8) comportant la mémoire de valeurs fixes.

4. Détecteur de mouvement suivant l'une des revendications 1 et 2, caractérisé en ce qu'un dispositif d'introduction (12) sert à l'introduction de données.

5. Détecteur de mouvement suivant l'une des revendications 1 et 3, caractérisé en ce qu'un commutateur de présélection (19) sert à l'introduction de données.

6. Détecteur de mouvement suivant l'une des revendications 1 à 5, caractérisé en ce qu'une mémoire de valeurs différentielles (11) forme et mémorise les durées de différences (D1, D2) entre une fin introduite du fonctionnement en dispositif de contrôle (a) et un lever de soleil (SA) du moment ainsi qu'entre un commencement introduit du fonctionnement en dispositif de contrôle (U) et le coucher du soleil (SU) du moment.

7. Détecteur de mouvement suivant l'une des revendications 1 à 6, caractérisé en ce que des données supplémentaires pour un fonctionnement à allumage ininterrompu de la source de lumière peuvent être introduites, le commencement du fonctionnement à allumage ininterrompu étant déterminé en fonction du coucher de soleil du moment, en prenant en considération une durée de différences prédéterminée en provenance du circuit d'évaluation (8).

8. Détecteur de mouvement suivant la revendication 7, caractérisé en ce que la première entrée (a) de la porte ET (4) est raccordée en plus à un autre étage de commutation (15) commandé également par le circuit d'évaluation (8), ce dernier étage (15) étant fermé au moyen du circuit d'évaluation (8) pendant le fonctionnement à allumage ininterrompu.
